# EUROPÄISCHE PATENTSCHRIFT

(11) **EP 0 516 085 B1**
(45) Veröffentlichungstag und Bekanntmachung des Hinweises auf die Patenterteilung: **02.08.1995**
(21) Anmeldenummer: 92108952.0
(22) Anmeldetag: 27.05.1992
(51) Int. Cl.: F24F 6/14

(54) **Raumklimagerät**
Room air conditioning device
Dispositif de climatisation d'un local

(30) Priorität: 29.05.1991 DE 4117645
(43) Veröffentlichungstag der Anmeldung: 02.12.1992
(73) Patentinhaber: Wittmann, Dieter, D-80335 München (DE); Hopp, Rafael, D-80636 München (DE)
(72) Erfinder: Wittmann, Dieter, D-80335 München (DE)
(74) Vertreter: Schütz, Peter, Dipl.-Ing.

(56) Entgegenhaltungen:
- DE-C- 3 518 456
- DE-U- 8 800 625
- FR-A- 1 411 179
- FR-A- 2 434 046
- GB-A- 2 215 234

## Beschreibung

Die Erfindung betrifft ein Raumklimagerät mit den im Oberbegriff des Anspruchs 1 angegebenen Merkmalen, wie es aus der DE-PS 35 18 456 bekannt ist.

Dieses Gerät hat ein aus einem Oberteil und einem Unterteil bestehendes Gehäuse, dessen Oberteil eine mit einem Luftfilter abgedeckte seitliche Ansaugöffnung für Raumluft und eine gegenüberliegende Ausblasöffnung für behandelte Luft aufweist und innerhalb dessen ein Gebläse zur Erzeugung einer Luftströmung von der Ansaugöffnung zur Ausblasöffnung angeordnet ist. Ferner befinden sich im Gehäuse UVA-, UVB- und UVC-Strahler zur Nachahmung des vollen UV-Spektrums des Sonnenlichts für die Entkeimung der eintretenden Luft und des in einem Flüssigkeitsbehälter befindlichen Vorrats an Luftbefeuchtungsmittel. Diese Flüssigkeit wird aus dem Flüssigkeitsbehälter mit einer Pumpe zu einer Düsenanordnung gepumpt, die einen quer zur Luftströmung verlaufenden Flüssigkeitsvorhang erzeugt. Ferner ist eine Heiz/Kühlvorrichtung zur Temperierung des austretenden Luftstroms vorgesehen. Die Luftausblasöffnung ist durch eine schwenkbare Klappe verschließbar, bei deren Öffnen ein Schalter zum Einschalten des Gerätes betätigt wird und die im aufgeklappten Zustand eine schräge Fläche zur Umlenkung des austretenden Luftstroms nach oben bildet. Es hat sich jedoch gezeigt, daß es bei dieser Art der Luftstromführung zu starken Salzablagerungen aus dem zur Luftbefeuchtung verwendeten Meerwasser auf der Klappe kommt und daß sich auch am Boden außerhalb des Gerätes Salz niederschlägt anstatt als Salznebel in den Raum geblasen zu werden. Auch gestaltet sich die Reinigung des Gerätes schwierig, so daß es zur Schmutzbildung an Kanten und Winkeln kommen kann. Ferner entstehen durch aus dem Flüssigkeitsvorhang herunterfallende Tropfen störende Geräusche.

Der Erfindung liegt die Aufgabe zugrunde, ein Raumklimagerät der eingangs genannten Art so auszubilden, daß
- bei Verwendung von salzhaltigen Flüssigkeiten, speziell Meerwasser, eine Salzablagerung im Bereich des Luftaustritts verhindert wird,
- mehr Salzpartikel in die Umgebungsluft geblasen werden,
- eine wirksame Geräuschdämmung ermöglicht ist und
- eine leichte Reinigung möglich ist.

Diese Aufgabe wird durch die im Anspruch 1 angegebenen Merkmale gelöst.

Weiterbildungen der Erfindung sind in den Unteransprüchen gekennzeichnet.

Durch die Vergrößerung der Ansaug- und Ausblasöffnungen läßt sich nicht nur der Luftdurchsatz wesentlich vergrößern und damit die Effektivität des Gerätes erheblich steigern, sondern die Gestaltung der Ausblasöffnung ergibt zusammen mit der Verlängerung der einen Wand des Flüssigkeitsbehälters zu einer durchgehenden, schräg verlaufenden Prallwand günstigere Strömungsverhältnisse an der Luftaustrittsseite, so daß praktisch keine Salzablagerungen mehr auf der Prallwand auftreten und die gereinigte und behandelte Luft mit allen aus dem Flüssigkeitsvorhang aufgenommenen Flüssigkeitsteilchen frei nach oben in den Raum abströmt, ohne daß man bei der Aufstellung des Gerätes etwa darauf achten müßte, daß die feuchte Luft nicht gegen Wände oder sonstige feuchtigkeitsempfindliche Gegenstände geblasen wird. Außerdem läßt die schräge Prallwand auftreffende Flüssigkeitströpfchen geräuschlos in den Behälter zurücklaufen, ohne daß Tropfgeräusche auftreten würden. Der einteilig mit der schrägen Prallwand ausgebildete Flüssigkeitsbehälter läßt sich leicht gründlich reinigen, was ein wichtiges hygienisches Erfordernis darstellt. Diesem Gesichtspunkt dient auch die vorteilhafte Ausgestaltung des erfindungsgemäßen Gerätes mit einer separat abnehmbaren Befeuchtungskammer und einem seitlich wegkippbaren Aggregatteil, welches in einer Offenstellung arretierbar ist, so daß der Feuchtigkeitsbehälter zum Herausnehmen und Reinigen leicht zugänglich wird.

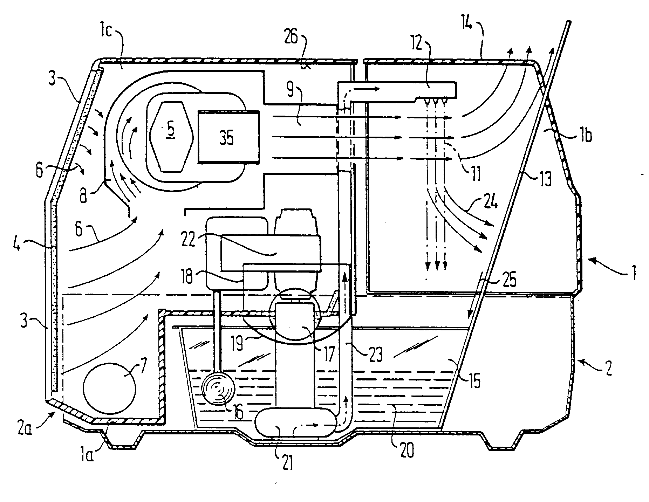

Weitere Vorteile der Erfindung werden nachfolgend im Zusammenhang mit der Erläuterung eines in der beiliegenden Figur veranschaulichten Ausführungsbeispiels im einzelnen erläutert.

Wie die Figur erkennen läßt, besteht das Gehäuse des Klimagerätes aus einem Oberteil 1 und einem Unterteil 2, auf welches das Oberteil aufgesetzt wird. Das Oberteil ist in eine separat abnehmbare Befeuchtungskammer 1b und einen Aggregatteil 1c unterteilt, der um ein hier nicht dargestelltes Gelenk zur Einlaßseite hin hochgekippt und in einer Schrägstellung arretiert werden kann, so daß man den Flüssigkeitsbehälter bequem herausnehmen kann. Auf der in der Figur linken Seite ist das Oberteil bis zum Boden des Gehäuses heruntergezogen und über die gesamte Höhe als Eintrittsöffnung 3 für Raumluft ausgebildet. Die gesamte Eintrittsöffnung 3 ist durch ein Luftfilter 4 abgedeckt, welches aus UVC-beständigem Material besteht und die mit Hilfe eines Gebläses 5 angesaugte Raumluft, die durch Pfeile 6 angedeutet ist, von Staub und sonstigen Partikeln befreit. Im herabgezogenen Teil 1a des Oberteils 1 angeordneter UVC-Strahler 7 erzeugt im Ansaugbereich eine UVC-Strahlung, welche die durch die Eintrittsöffnung 3 und das Filter 4 angesaugte Luft entkeimt, wozu die UVC-Strahlungsleistung mindestens 100 mW betragen sollte, ehe die Luft durch einen Luftkanal 8 des Gebläses 5 in einen Luftstrom 9 gerichtet wird, der durch einen Nebelvorhang 11 geblasen wird, der mit Hilfe einer Düsenanordnung 12 erzeugt wird, die weiter unten noch näher erläutert wird. Aus diesem Nebelvorhang nimmt die gereinigte Luft Feuchtigkeit auf und wird dann durch eine ebenfalls noch zu erläuternde Prallwand 13 nach oben gelenkt, wo sie schließlich das Gehäuse durch eine Austrittsöffnung 14 verläßt und in den zu klimatisierenden Raum eintritt.

Die den Nebelvorhang 11 erzeugende Düsenanordnung 12 wird mit einer Behandlungsflüssigkeit gespeist, die einem Flüssigkeitsbehälter 15 entnommen wird. Dieser besteht zweckmäßigerweise aus Glas, welches unempfindlich gegen die verschiedensten Flüssigkeiten, beispielsweise auch gegen Meerwasser ist, das sich zur Befeuchtung der Luft als Therapeutikum bei verschiedenen Erkrankungen bewährt hat. Glas mit einer Wandstärke von 6 mm hat sich als ausreichend stabil auch gegen mechanische Beschädigungen erwiesen. Da Glas durchsichtig ist, gestattet es auch eine optische Kontrolle des Flüssigkeitsstandes durch eine - hier allerdings nicht dargestellte - seitliche Gehäuseöffnung. Zur Pegelstandskontrolle ist außerdem ein Schwimmer 16 vorgesehen, der beispielsweise eine Stange bewegt, deren Ende mit einer Lichtschrankenanordnung zusammenarbeitet und eine Anzeige des Pegelstandes beispielsweise über verschiedenfarbige Leuchtdioden gestattet. So kann ein voller Flüssigkeitsbehälter durch eine grüne Leuchtdiode, ein nachzufüllender durch eine gelbe und schließlich ein geleerter Flüssigkeitsbehälter durch eine rote Leuchtdiode angezeigt werden. Dieser Anzeigezustand eines leeren Flüssigkeitsbehälters kann auch dazu benutzt werden, das Gerät abzuschalten, damit es nicht trocken läuft. Damit sich in der Behandlungsflüssigkeit keine Keime ansammeln oder vermehren, ist oberhalb des Flüssigkeitsbehälters ein zweiter UVC-Strahler 17 angeordnet, der dazu eine UVC-Strahlungsleistung von mindestens 200 mW haben soll. Dieser Strahler sitzt innerhalb eines Lampengehäuses 18, welches innen mit einer UVC-reflektierenden Beschichtung versehen ist und unten über dem Flüssigkeitsspiegel mit einer gewölbten Quarzglasscheibe 19 abgeschlossen ist, durch welche die UVC-Strahlung auf die Behandlungsflüssigkeit 20 einwirkt, so daß darin befindliche Keime abgetötet werden.

An der tiefsten Stelle des Flüssigkeitsbehälters 15 befindet sich die Ansaugöffnung einer selbstansaugenden Pumpe 21, die zweckmäßigerweise als Tauchkreiselpumpe ausgebildet und gegen Trockenlauf unempfindlich ist und von einem Pumpenmotor 22 angetrieben wird. Sie befördert die Behandlungsflüssigkeit 20 durch ein Steigrohr 23 zu der Düsenanordnung 12, welche den nach unten gerichteten Tröpfchen oder Nebelvorhang 11 erzeugt, durch welchen der Luftstrom 9 quer hindurchgeblasen wird und dabei mit Feuchtigkeit angereichert wird, ehe er durch die Prallwand 13 nach oben gelenkt wird und durch die Austrittsöffnung 14 das Gerät verläßt. Aus dem Nebelvorhang 11 heraustropfende Flüssigkeitspartikel, die in der Figur durch die Pfeile 24 angedeutet sind, treffen ebenfalls auf die schräge Prallwand 13 auf und fließen in den Flüssigkeitsbehälter 15 zurück, wie dies der Pfeil 25 andeutet, womit lästige Tropfgeräusche vermieden werden. Ein Schrägwinkel der Prallwand von ungefähr 110° hat sich als zweckmäßig erwiesen. Durch eine einteilige Ausbildung der Prallwand 13 mit dem Flüssigkeitsbehälter 15 werden Übergangsfugen vermieden, welche Anlaß zu Undichtigkeiten geben und eine Reinigung erschweren könnten.

Es hat sich ferner als zweckmäßig herausgestellt, die Innenflächen des Gehäuses mit einer Aluminiumschicht 25 auszukleiden, die beispielsweise aufgedampft sein kann, weil dadurch eine sichere Entkeimung des Gehäuses erleichtert wird und das Kunststoffmaterial des Gehäuses nicht durch die UVC-Strahlung angegriffen wird.

Zur Überwachung der Einsatzzeiten ist das Gerät ferner mit einer hier nicht dargestellten Schaltuhr versehen, mit Hilfe deren sich über den Lauf des Tages verteilt mehrere Einschaltphasen einstellbarer Länge programmieren lassen. Ferner ist es zweckmäßig, beim Einschalten des Gerätes das Gebläse mit seitlicher Verzögerung gegenüber den UV-Strahlern und der Pumpe anlaufen zu lassen, so daß nach Standzeiten das Gehäuseinnere entkeimt wird, ehe der Luftstrom durch das Gehäuse einsetzt. Pumpe und UVC-Strahler sollten mindestens 30 Sekunden lang arbeiten, ehe sich der Lüfter zuschaltet. Auf diese Weise wird eine ausreichende Entkeimung des Luftansaugtraktes mit dem Luftfilter und der im Flüssigkeitsbehälter befindlichen Behandlungsflüssigkeit auch nach längerer Standzeit erreicht und vermieden, daß möglicherweise in das Gerät gelangte Keime beim Einschalten in den Raum geblasen werden.

## Patentansprüche

1. Raumklimagerät mit einem aus einem Oberteil und einem Unterteil bestehenden Gehäuse mit
- Luftansaug- und Luftausblasöffnungen, wobei die Luftansaugöffnung mit einem Filter abgedeckt ist,
- einem Raumluft ansaugenden Gebläse,
- einem Flüssigkeitsbehälter,
- mindestens einem UVC-Strahler als Bestrahlungseinrichtung für den Flüssigkeitsvorrat,
- einer Pumpe,
- und einer Düsenanordnung zur Erzeugung eines quer zur Luftströmung verlaufenden Flüssigkeitsvorhangs,
**dadurch gekennzeichnet,**
daß das Oberteil (1) des Gehäuses auf der Lufteintrittsseite bis etwa zum Gehäuseboden herabgezogen ist (bei 1a) und die Luftansaugöffnung (3) nach unten über die gesamte Gehäusehöhe ausgedehnt ist, wobei das Unterteil (2) an dieser Seite eine die herabgezogene Ansaugöffnung freigebende Ausnehmung (2a) aufweist,
und daß die Ausblasöffnung (14) in die Oberseite des Oberteils (1) hineingezogen ist und auf der Luftaustrittsseite durch eine als Fortsetzung einer Wand des Flüssigkeitsbehälters (15) ausgebildete, vorzugsweise unter einem Schrägwinkel von 110° verlaufende Prallwand (13) begrenzt ist, welche den Luftstrom (9) nach oben lenkt und überschüssige Flüssigkeit in den Flüssigkeitsbehälter (15) zurückleitet.

2. Raumklimagerät nach Anspruch 1, **dadurch gekennzeichnet,** daß das Oberteil (1) in eine separat abnehmbare Befeuchtungskammer (1b) und ein seitlich wegkippbares Aggregatteil (1c) unterteilt ist, wobei das Aggregatteil (1c) in einer Offenstellung arretierbar ist.

3. Raumklimagerät nach Anspruch 1, **dadurch gekennzeichnet,** daß der UVC-Strahler (17) in einem Lampengehäuse (18) angeordnet ist, dessen Unterseite als gewölbte Quarzglasscheibe (19) ausgebildet ist und das im übrigen innen mit einem UVC reflektierenden Material beschichtet ist.

4. Raumklimagerät nach Anspruch 3, **dadurch gekennzeichnet,** daß der UVC-Strahler (17) eine Strahlungsleistung von mindestens 200 mW UVC aufweist.

5. Raumklimagerät nach einem der Ansprüche 1 bis 3, **dadurch gekennzeichnet,** daß ein weiterer UVC-Strahler (7) mit einer Strahlungsleistung von mindestens 100 mW UVC hinter dem herabgezogenen Teil der Luftansaugöffnung (3) angeordnet ist.

6. Raumklimagerät nach Anspruch 1, **dadurch gekennzeichnet,** daß die Innenflächen des Gehäuses (1,2) mit einer Aluminiumschicht (26) ausgekleidet sind.

7. Raumklimagerät nach Anspruch 1, **dadurch gekennzeichnet,** daß der Flüssigkeitsbehälter (15) aus Glas besteht.

8. Raumklimagerät nach Anspruch 1 oder 7, **dadurch gekennzeichnet,** daß das Unterteil (2) des Gehäuses im Bereich des Flüssigkeitsbehälters (15) ein seitliches Fenster aufweist.

9. Raumklimagerät nach Anspruch 1, **gekennzeichnet durch** einen Pegelfühler mit einer durch einen Schwimmer (16) gesteuerte Photozellenanordnung und einer Leuchtdiodenanzeige für den Pegelstand der Flüssigkeit.

10. Raumklimagerät nach Anspruch 1, **dadurch gekennzeichnet,** daß das Filter (4) aus UVC-beständigem Material besteht.

11. Raumklimagerät nach Anspruch 1, **gekennzeichnet durch** eine Einschaltverzögerung für das Gebläse (5).

12. Raumklimagerät nach Anspruch 1, **gekennzeichnet durch** eine einstellbare Zeitschaltuhr.

## Claims

1. Room air conditioning device with a housing comprising an upper portion and a lower portion, having
- air intake and air exhaust openings, the air intake opening being covered by a filter,
- a fan aspirating air from the room,
- a liquid container,
- at lease one UVC radiator as radiation device for the stored liquid,
- a pump,
- and a nozzle arrangement for generation of a curtain of liquid extending transversely to the air flow,
characterised in that the upper portion (1) of the housing is projected downwards an the air entry side approximately as far as the housing base (at 1a) and the air intake opening (3) is extended downwards over the entire height of the housing, and the lower portion (2) on this side has a recess (2a) exposing the extended intake opening;
and that the exhaust opening (14) is drawn into the upper side of the upper portion (1) and is defined on the air exit side by a baffle (13) constructed as an extension to a wall of the liquid container (15) and preferably extending at a sloping angle of 110°, said baffle deflecting the air stream (9) upwards and returning excess liquid into the liquid container (15).

2. Room air conditioning device according to Claim 1, characterised in that the upper portion (1) is divided into a separately detachable humidifying chamber (1b) and an aggregate part (1c), which may be tilted away to the side, said aggregate part (1c) being lockable in an open position.

3. Room air conditioning device according to Claim 1, characterised in that the UVC radiator (17) is disposed in a lamp casing (18), the underside of which is constructed in the form of an arched pane of quartz glass (19) and which is additionally coated on the inside with a UVC-reflective material.

4. Room air conditioning device according to Claim 3, characterised in that the UVC radiator (17) has a radiation capacity of at least 200 mW UVC.

5. Room air conditioning device according to one of Claims 1 to 3, characterised in that a further UVC radiator (7) with a radiation capacity of at least 100 mW UVC is disposed behind the downwardly extended portion of the air intake opening (3).

6. Room air conditioning device according to Claim 1, characterised in that the inside surfaces of the housing (1, 2) are lined with an aluminium layer (26).

7. Room air conditioning device according to Claim 1, characterised in that the liquid container (15) is made of glass.

8. Room air conditioning device according to Claim 1 or 7, characterised in that the lower portion (2) of the housing has a side window in the area of the liquid container (15).

9. Room air conditioning device according to Claim 1, characterised by a level sensor with a photoelectric cell arrangement controlled by a float (16) and an LED display for the level of the liquid.

10. Room air conditioning device according to Claim 1, characterised in that the filter (4) is made from UVC-resistant material.

11. Room air conditioning device according to Claim 1, characterised by a cut-in delay for the fan (5).

12. Room air conditioning device according to Claim 1, characterised by an adjustable timer switch.

## Revendications

1. Appareil de climatisation d'un local comportant a boîtier constitué d'une partie supérieure et d'une partie inférieure, avec des ouvertures d'aspiration d'air et de soufflage d'air, l'ouverture d'aspiration d'air étant recouverte d'un filtre, a ventilateur d'aspiration de l'air du local, un récipient de liquide, au moins a générateur de rayons ultraviolets C en tant que dispositif d'irradiation pour la matière liquide, une pompe, et un ensemble à buse pour la production d'un rideau liquide s'étendant transversalement par rapport au courant d'air, caractérisé a ce que la partie supérieure (1) du boîtier s'étend vers le bas (en la) du côte de l'entrée d'air, pratiquement jusqu'au fond du boîtier et l'ouverture d'aspiration d'air (3) s'étend vers le bas sur la totalité de la hauteur du boîtier, la partie inférieure (2) présentant, de ce côté, un espace (2a) laissant un passage libre pour l'ouverture d'aspiration s'étendant vers le bas, et en ce que l'ouverture de soufflage (14) est réalisée dans la face supérieure de la partie supérieure (1) et elle est délimitée, du côté de la sortie de l'air, par une paroi d'impact formée par un prolongement d'une paroi du récipient de liquide (15) et s'étendant de préférence suivant un angle d'inclinaison de 110°, cette paroi d'impact déviant le courant d'air (9) vers le haut et retournant le liquide en surplus dans le récipient de liquide (15).

2. Appareil de climatisation d'un local suivant la revendication 1 caractérisé en ce que la partie supérieure (1) est subdivisée en une chambre d'humidification amovible séparée (1b) et une partie auxiliaire (1c) pouvant basculer latéralement, cette partie auxiliaire (1c) pouvant être arrêtée dans une position d'ouverture.

3. Appareil de climatisation d'un local suivant la revendication 1 caractérisé en ce que le générateur de rayons ultraviolets C (17) est disposé dans un boîtier de lampe (18) dont la face inférieure est réalisée sous la forme d'un disque de verte quartzeux bombé (19) et qui est recouvert en totalité, à l'intérieur, d'un matériau réfléchissant les rayons UVC.

4. Appareil de climatisation d'un local suivant la revendication 3 caractérisé en ce que le générateur de rayons ultraviolets C (17) a une puissance de rayonnement d'au moins 200 mW UVC.

5. Appareil de climatisation d'un local suivant l'une quelconque des revendications 1 à 3 caractérisé en ce qu'un autre générateur de rayons ultraviolets C (7), ayant une puissance de rayonnement d'au moins 100 mW UVC, est disposé en arrière de la partie s'étendant vers le bas de l'ouverture d'aspiration d'air (3).

6. Appareil de climatisation d'un local suivant la revendication 1 caractérisé en ce que la surface interne du boîtier (1,2) est revêtue d'une couche d'aluminium (26).

7. Appareil de climatisation d'un local suivant la revendication 1 caractérisé en ce que le récipient de liquide (15) est réalisé en verte.

8. Appareil de climatisation d'un local suivant l'une quelconque des revendications 1 ou 7 caractérisé en ce que la partie inférieure (2) du boîtier présente une fenêtre latérale dans la zone du récipient de liquide (15).

9. Appareil de climatisation d'un local suivant la revendication 1 caractérisé en ce qu'il comporte un capteur de niveau avec un ensemble de cellule photoélectrique commandé par un flotteur (16) et un afficheur à diode luminescente pour indiquer le niveau du liquide.

10. Appareil de climatisation d'un local suivant la revendication 1 caractérisé en ce que le filtre (4) est composé d'un matériau résistant aux rayons UVC.

11. Appareil de climatisation d'un local suivant la revendication 1 caractérisé en ce qu'il comporte un dispositif de retardement de la mise en service du ventilateur (5).

12. Appareil de climatisation d'un local suivant la revendication 1 caractérisé en ce qu'il comporte une horloge de programmation réglable des périodes de mise en service.
